# EUROPÄISCHE PATENTSCHRIFT

(11) **EP 2 028 464 B1**
(45) Veröffentlichungstag und Bekanntmachung des Hinweises auf die Patenterteilung: **05.08.2015**
(21) Anmeldenummer: 08014952.9
(22) Anmeldetag: 23.08.2008
(51) Int. Cl.: G01J 5/00, G01N 25/72, F01K 13/00, F01K 23/10

(54) **Verfahren zur Ermittlung und Überwachung des Materialerschöpfungsgrades der Rohre von Heizflächen in mit fossilen Brennstoffen befeuerten Dampferzeugungsanlagen**
Method for calculating and monitoring the material usage level of pipes in heating areas in steam creation assemblies lit with fossil fuels
Procédé de détermination et de surveillance du degré de fatigue du matériau des tuyaux de surfaces de chauffage dans des installations de production de vapeur alimentées par des combustibles fossiles

(30) Priorität: 23.08.2007 DE 102007039945
(43) Veröffentlichungstag der Anmeldung: 25.02.2009
(73) Patentinhaber: RWE Power Aktiengesellschaft, 45128 Essen (DE); Koschack, Ralf, 18469 Velgast (DE)
(72) Erfinder: Grabig, Jürgen, 03099 Kolkwitz (DE); Hoffmann, Bernhard, 50259 Pulheim (DE); Koschak, Ralf, 18469 Velgast (DE)
(74) Vertreter: Kierdorf Ritschel

(56) Entgegenhaltungen:
- US-A- 5 355 845
- US-A- 5 462 358

## Beschreibung

Die Erfindung betrifft ein Verfahren zur Ermittlung und Überwachung des Materialerschöpfungsgrades der Rohre von Heizflächen in mit fossilen Brennstoffen befeuerten Dampferzeugungsanlagen.

Die Kessel solcher Dampferzeugungsanlagen umfassen üblicherweise einen im Querschnitt rechteckigen Feuerraum mit einem trichterförmigen Ascheabzug. Die Wände des Feuerraums sind aus miteinander verschweißten Rohren aufgebaut, die der Länge nach über den gesamten Umfang des Feuerraumes geführt sind und von Wasser und Wasserdampf als Arbeits- oder Kühlmedium durchströmt werden. Innerhalb des Feuerraums wird üblicherweise die durch Brenner erzeugte Strahlungswärme zur Verdampfung des Wassers genutzt. Oberhalb des Feuerraums sind in einem oder mehreren Rauchgaszügen sogenannte Nachschaltheizflächen zu Nutzung der konvektiven Wärme angeordnet.

Bei neuen überkritisch befeuerten Dampfkesselanlagen werden die Kesselwände des Verdampfers im Strahlungsbereich hohen Druck- und Temperaturbelastungen ausgesetzt. Der in den Rohren zirkulierende Dampf wird auf Temperaturen von deutlich über 500 °C erhitzt, es herrschen Drücke von bis zu 300 bar vor. In diesem überkritischen Temperaturbereich (Überkritisch im Sinne der Erfindung bedeutet, es herrschen Drücke und Temperaturen vor, bei denen der Übergang von der Flüssigkeit zu Dampf stetig erfolgt, ohne dass sich Wasser in Flüssigkeit und Dampf trennt,) werden die Rohre nicht mehr im Streckgrenzbereich sondern im Zeitstandbereich betrieben. Zeitstandsfestigkeiten sind zeit- und beanspruchungsabhängige Werkstoffkennwerte, die in sogenannten Lebensdauerkennlinien dargestellt werden können und aus denen die zulässige Betriebszeit oder eine zulässige Materialbeanspruchung oder eine betriebszeitabhängige Materialerschöpfung bestimmt werden kann. Das zeitabhängige Werkstoffverhalten (Festigkeitsabnahme, Erschöpfungszunahme, Restlebensdauerverkürzung) macht in der Regel eine regelmäßige Prüfung der Kesselwände zur Ermittlung des tatsächlichen Werkstoffzustandes erforderlich.

Dies geschieht entweder durch Probeschneiden von Passstücken und deren Laboruntersuchung, durch Gefügeabdruckentnahme oder in Kombination von beiden Methoden. Hierzu ist eine Außerbetriebnahme des Kessels erforderlich, was aus Gründen des hiermit einhergehenden Produktionsausfalls nicht wünschenswert ist. Außerdem sind die zuvor beschriebenen Verfahren sehr teuer und liefern nur punktuell Aufschluss über den Zustand der Heizflächen.

Bei bekannter Materialbeanspruchung lässt sich die theoretische Materialerschöpfung beziehungsweise die Restlebensdauer von Rohren grundsätzlich berechnen. Bei Heizflächen von Dampferzeugern und insbesondere bei Strahlungsheizflächen von Dampferzeugern ist jedoch die Ermittlung der für die Lebensdauer maßgeblichen Wandtemperatur der Rohre recht schwierig, da die Wandtemperatur auch abhängig von innen- und außenseitigen Belägen (Aschen, Schlacken, Magnetitschichten) sowie den im Feuerraum zeitlich oder örtlich wechselnden Wärmestromdichten (Feuerführung, Kohlequalität) abhängt.

Aus dem Dokument C.J. Moss, P. Barrien, A. Walczynski, "Life management of refinery furnace tubing", International Journal of Pressure Vessels and Piping, Vol. 77, Seiten 105 bis 112, Ausgabe Feb. 2000 ist ein Verfahren zur Ermittlung und Überwachung des Materialerschöpfungsgrades der Rohre von Heizflächen mit infossilen Brennstoffen befeuerten Brennkesseln mittels wenigstens einer Einrichtung zur Aufnahme eines Wärmebildes bekannt. Das Verfahren umfasst die Schätzung der Rohrtemperaturen aufgrund von thermographischen Daten und Wärmeübergangsberechnungen. Insbesondere ist aus dem Dokument ein Verfahren bekannt, bei dem für eine Raffineriebrennkammer die Rohroberflächentemperatur anhand zweidimensionaler Wärmebilder gemessen wird. Die an der Raffineriebrennkammer zeitlich und örtlich konstante Belagdicke und Wärmestromdichte oder eine konstante Temperaturdifferenz von 50°C geschätzt, um welche die Materialtemperatur der Rohraußenwand niedriger ist als die gemessene Oberflächentemperatur des Belages.

Dieser Ansatz trägt allerdings grundsätzlich nicht einer sich ständig in Betrieb ändernden Belagdicke Rechnung.

Der Erfindung liegt daher die Aufgabe zu Grunde, ein völlig neuartiges Verfahren zur Ermittlung und Überwachung des Materialerschöpfungsgrades der Rohre von Heizflächen in mit fossilen Brennstoffen befeuerten Dampferzeugungsanlagen bereitzustellen, das im Wesentlichen zerstörungsfrei und ohne Außerbetriebnahme des Dampferzeugers durchführbar ist.

Die Aufgabe wird gelöst durch ein Verfahren nach Anspruch 1.

Auf diese Art und Weise lässt sich für jedes der Segmente der Wände des Feuerraums eine mittlere Rohrwandtemperatur (zeitgemittelt) über die gesamte Betriebszeit des Kessels ermitteln, auf Grund derer dann eine zuverlässige Lebensdauerprognose für das betreffende Segment erstellt werden kann.

Die Aussagegenauigkeit der Lebensdauerprognose wird erhöht, wenn die Streuungen der mittleren Wandtemperatur in einer Häufungsklassifizierung dargestellt und die klassifizierten mittleren Wandtemperaturen gewichtet sind.

Das erfindungsgemäße Verfahren ist insbesondere zur Ermittlung eines theoretischen Materialerschöpfungsgrades der Rohre von Strahlungsheizflächen geeignet, ebenso eignet sich das Verfahren zur Ermittlung eines theoretischen Materialerschöpfungsgrades anderer Heizflächen eines Dampferzeugers.

Das Verfahren hat den Vorzug, dass eine gegebenenfalls auf Grund von Vorschriften erforderliche physikalische Materialprüfung auf den spätest möglichen Zeitpunkt verschoben werden kann. Mit Hilfe einer oder mehrerer Infrarotkameras können die realen Oberflächentemperaturen der Flächen des Feuerraums ermittelt werden. Diese Oberflächentemperaturen geben an und für sich noch keinen Aufschluss darüber, wie hoch die lebensdauerrelevante Wandtemperatur jedes Segments ist. Erfindungsgemäß werden hierzu für jedes der Segmente der einfallende Wärmestrom und der Nutzwärmestrom ermittelt, so dass auf diese Art und Weise ein Maß für die Heizflächenwertigkeit beziehungsweise Heizflächeneffektivität erhalten wird. Über die Heizflächeneffektivität kann der Einfluss der Ablagerung auf den Heizflächen bei der Ermittlung der Oberflächentemperatur eliminiert werden, so dass für jedes der Segmente als Funktion des einfallenden Wärmestroms, des Nutzwärmestroms und der mittleren Oberflächentemperatur eine mittlere Rohrwandtemperatur errechnet werden kann, die über die Betriebszeit der Rohre fortgeschrieben und gemittelt sowie ausgewertet werden kann.

Auf Grund dieses Verfahrens kann durch die Ermittlung der tatsächlichen mittleren Wandtemperatur der Rohre der Strahlungsheizflächen in vorteilhafter Weise eine Erschöpfungsberechnung auf die Kesselwände angewandt werden.

Vorzugsweise wird aus der mittleren Rohrwandtemperatur unter Berücksichtigung der dampfdruckinduzierten Materialspannungen ein theoretischer Lebensdauerverbrauch der Rohre eines Segments ermittelt. Hierdurch ist es erfindungsgemäß möglich, Bereiche der Feuerraumwände zu erkennen und darzustellen, die einen höheren oder den höchsten Materialerschöpfungsgrad besitzen. Auf Grund dieser Erkenntnis lässt sich eine orts- und zeitabhängige Prüfreihenfolge für den Materialerschöpfungszustand der Feuerraumwände festlegen.

Zweckmäßigerweise wird die Rohrwandtemperatur als örtlicher Mittelwert über die Wanddicke ermittelt. Der geometrische Mittelwert kann unter Berücksichtigung der Temperaturverteilung in der Rohrwand gewichtet werden, d.h., dass die lebensdauerrelevante mittlere Wandtemperatur gemäß dem zu erwartenden Schadensmechanismus gewichtet wird.

Zweckmäßigerweise wird der einfallende Wärmestrom durch Messung für verschiedene Betriebsparameter in der Inbetriebnahmephase des Dampferzeugers ermittelt. Dies kann mittels an und für sich bekannter instationärer Wärmestromdichtesonden erfolgen.

Bei einer bevorzugten Variante des Verfahrens gemäß der Erfindung ist vorgesehen, dass der Nutzwärmestrom für jedes Segment über die Dampftemperatur der Rohre in dem betreffenden Segment ermittelt wird.

Zweckmäßigerweise wird die Dampftemperatur an einer Messstelle des Dampferzeugers direkt gemessen und die Dampftemperatur in den Rohren des betreffenden Segments ausgehend von der Messstelle der direkten Messung berechnet. Als Messstelle für die direkte Messung der Dampftemperatur in den Rohren kann jede an einem Dampferzeuger bereits vorhandene Messstelle genutzt werden. Die Berechnung erfolgt unter Zugrundelegung des als Funktion des einfallenden Wärmestroms, der Dampftemperatur und der Oberflächentemperatur zunächst näherungsweise ermittelten Nutzwärmestroms. Die genauere Ermittlung des Nutzwärmestroms erfolgt dann unter Nutzung der berechneten Dampftemperatur des betreffenden Segments.

Die Dampfaustrittstemperatur kann beispielsweise am Dampfaustritt eines jeden Rohres der ersten Überhitzerstufe gemessen werden. Selbstverständlich ist es auch möglich, die Dampfaustrittstemperatur an anderen Messstellen wie beispielsweise am Dampfaustritt des Verdampfers zu messen.

Zwecks Kalibrierung der Berechnung kann der Nutzwärmestrom in einem Segment unter Verwendung von stationären Wärmestromsensoren gemessen werden. Dieses Segment kann ebenso zur Kalibrierung der Messung der mittleren Oberflächentemperatur mittels Wärmebild verwendet werden.

Die Erfindung wird nachstehend unter Bezugnahme auf die beigefügten Zeichnungen erläutert.

Es zeigen:
- Figur 1:: eine schematische Ansicht eines Feuerraums und
- Figur 2:: die Darstellung des Temperaturverlaufs über einen Teilschnitt durch die Feuerraumwand.

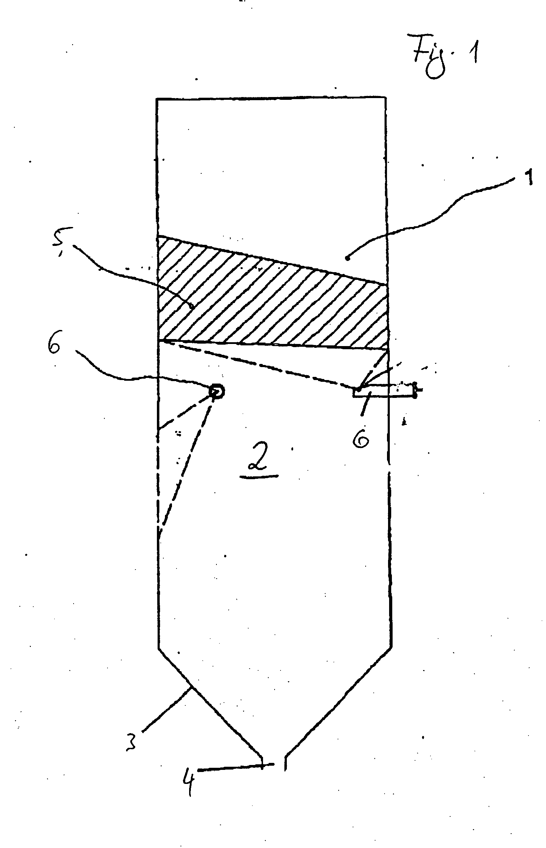

In Figur 1 ist der Feuerraum 1 eines mit fossilen Brennstoffen befeuerten Kraftwerkkessels schematisch und stark vereinfacht dargestellt. Der Feuerraum 1 besitzt einen im Wesentlichen rechteckigen Querschnitt und ist von vier Wänden 2 begrenzt, die jeweils als Strahlungsheizflächen eines Verdampfers ausgebildet sind. Die Wände 2 des Feuerraums bestehen im Wesentlichen aus Rohren, die von Wasser und/oder Wasserdampf als Arbeits- oder Kühlmedium durchströmt werden. Der Feuerraum 1 ist nach unten durch einen trichterförmigen Boden 3 begrenzt, der in einem Ascheabzug 4 mündet. Nach oben schließen sich ein oder mehrere Rauchgaszüge (nicht dargestellt) mit Nachschaltheizflächen an.

In ebenfalls nicht dargestellten Ausnehmungen der Wände 2 des Feuerraums 1 sind beispielsweise Kohlenstaubbrenner angeordnet, deren Flammen die Strahlungswärme an die Wände 2 des Feuerraums übertragen.

Ein Teil der bei der Verbrennung des Kohlenstaubs zurückbleibenden Feststoffpartikel wird von den im Feuerraum 1 aufsteigenden Rauchgasen mitgeführt. Je nach Menge und Zusammensetzung der Feststoffpartikel bilden sich auf der Rauchgasseite der Wände mehr oder weniger starke Asche-und/oder Schlackeablagerungen 5. Diese Ablagerungen 5 werden üblicherweise beispielsweise mittels Wasserlanzenbläsern während des Betriebs des Kessels abgereinigt.

Mit den Bezugszeichen 6 sind jeweils Infrarotkameras bezeichnet, die beispielsweise in jeder Wand 2 des Feuerraums 1 so angeordnet sind, dass sie jeweils wenigstens eine gegenüberliegende Wand 2 des Feuerraums 1 bestreichen und von dieser Wand 2 ein Infrarotbild beziehungsweise Wärmebild erzeugen können. Über eine abgewickelte Darstellung der Wände 2 lässt sich auf diese Art und Weise ein vollständiges Wärmebild aller Wände 2 des Feuerraums 1 erstellen.

Die Wände 2 des Feuerraums 1 werden erfindungsgemäß in n-Segmente einer Größe von 1 m x 1 m aufgeteilt, wobei für jedes Segment eine Oberflächentemperatur Tₒ durch Auswertung des Wärmebildes ermittelt wird. Jedes Segment kann beispielsweise fünfzehn nebeneinander liegende Rohre beziehungsweise Rohrabschnitte je ca. 1 m Länge umfassen.

Auf Grund mehrerer in der Inbetriebnahmephase des Kessels durchgeführter Wärmestrommessungen für verschiedene Betriebsparameter des Dampferzeugers mittels einer oder mehrer instationärer Wärmestromsonden kann für jedes Segment der einfallende Wärmestrom Q.₀ ermittelt werden.

Am Dampfaustritt der ersten Überhitzerstufe wird für jedes Rohr der Überhitzerstufe die Dampfaustrittstemperatur T_{D} gemessen. Dann wird der Nutzwärmestrom Q _{Nutz} als Funktion f (Q₀, Tₒ, T_{D}) näherungsweise berechnet und mit diesem, ausgehend von der an der Messstelle direkt gemessenen Dampftemperatur die Dampftemperatur für jedes der n-Segmente bis zum Rohrabschnitt des betreffenden Segmentes berechnet. Die genaue Berechnung des Nutzwärmestroms erfolgt dann unter Nutzung der berechneten Dampftemperatur des betreffenden Segments.

Für jedes Segment mit einer Fläche von etwa 1 m x 1 m werden aus dem Nutzwärmestrom Q_{Nutz}, dem einfallenden Wärmestrom Qₒ, der Oberflächentemperatur T_{O} und der Dampftemperatur T_{D} die Temperatur der Rohroberfläche T_{RO}, die Temperatur der Rohrinnenfläche T_{RI} und die mittlere Rohrwandtemperatur T_{RM} berechnet.

Die mittlere Rohrwandtemperatur T _{RN} wird aus dem Mittel der Temperatur der Rohroberfläche T_{RO} und der Temperatur der Rohrinnenfläche T_{RI} berechnet, wobei die mittlere Rohrwandtemperatur T_{RN} nicht das arithmetische Mittel zwischen T_{RO} und T_{Ri} ist, vielmehr erfolgt eine Wichtung unter Berücksichtigung der Temperaturverteilung in der Rohrwand. Vereinfacht wäre es auch möglich, als mittlere Rohrwandtemperatur T_{RM} das arithmetische Mittel zwischen der Rohrwandoberfläche und der Rohrwandinnenfläche einzusetzen. Erstere Variante hat allerdings den Vorteil, dass ein schädigungsrelevanter Temperaturmittelwert erhalten wird, der der Temperaturverteilung in der Rohrwand gerecht wird.

Die mittleren Materialtemperaturen werden unter Verknüpfung mit der mediendruckbedingten Spannung in Matrizen klassifiziert und als segmentbezogener Erschöpfungsgrad dargestellt.

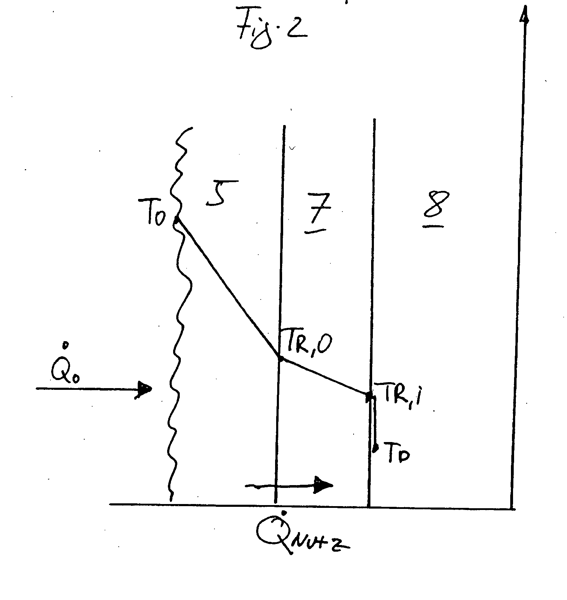

In Figur 2 ist der Temperaturverlauf über die Dicke der Wände 2 dargestellt, wobei mit 5 die Ablagerungen bezeichnet sind, mit 7 die Rohrwandung und mit 8 das Arbeitsmedium, in diesem Falle Wasser und/oder Dampf.

Zur Kalibrierung für einen unbekannten Emissionsgrad der Verschmutzung kann eine punktuelle Dauermessung des Nutzwärmestroms und der Rohrwandtemperatur (T_{RI} und T_{RO}) mittels stationärer Wärmestromsensoren erfolgen. Die Kalibrierung der Infrarotmessung kann anhand der gleichen Messpunkte vorgenommen werden.

### Bezugszeichenliste:

- 1): Feuerraum
- 2): Wände
- 3): Boden
- 4): Ascheabzug
- 5: Ablagerungen
- 6): Infrarotkameras
- 7): Rohrwand
- 8): Arbeitsmedium

## Patentansprüche

1. Verfahren zur Ermittlung und Überwachung des Materialerschöpfungsgrades der Rohre von Heizflächen in mit fossilen Brennstoffen befeuerten Dampferzeugungsanlagen mittels wenigstens einer Einrichtung zur Aufnahme eines Wärmebildes,
- wobei die Wände des Feuerraums in n-Segmente aufgeteilt werden,
- wenigstens ein Wärmebild des Feuerraums erstellt wird,
- für jedes der Segmente anhand des Wärmebildes eine mittlere Oberflächentemperatur ermittelt wird,
- für jedes der Segmente der einfallende Wärmestrom durch Messung für verschiedene Betriebsparameter in der Inbetriebnahmephase des Dampferzeugers ermittelt wird,
- die Dampftemperatur eines jeden Rohres des Dampferzeugers an einer Messstelle gemessen wird,
- für jedes der Segmente der Nutzwärmestrom als Funktion des einfallenden Wärmestroms des betreffenden Segments, der mittleren Oberflächentemperatur des betreffenden Segments, und der gemessenen Dampftemperatur in den Rohren des betreffenden Segments näherungsweise berechnet wird,
- die Dampftemperatur in den Rohren des betreffenden Segments durch Näherungsberechnung über die Rohrlänge von der Messstelle ausgehend für jedes der n-Segmente unter Zuhilfenahme des berechneten Nutzwärmestromes berechnet wird,
- der Nutzwärmestrom unter Nutzung der berechneten Dampftemperatur des betreffenden Segments genau berechnet wird,
- für jedes der Segmente als Funktion des einfallenden Wärmestroms, des berechneten Nutzwärmestroms und der mittleren Oberflächentemperatur eine mittlere Rohrwandtemperatur zeitgemittelt über die Betriebszeit der Rohre des Segments ermittelt wird, und
- ein theoretischer Lebensdauerverbrauch der Rohre des Segments aus der mittleren Rohrwandtemperatur unter Berücksichtigung der Materialspannungen berechnet wird.

2. Verfahren nach Anspruch 1, **dadurch gekennzeichnet, dass** die Rohrwandtemperatur als Mittelwert örtlich gemittelt über die Wanddicke ermittelt wird.

3. Verfahren nach Anspruch 2, **dadurch gekennzeichnet, dass** der geometrische Mittelwert unter Berücksichtigung der Temperaturverteilung der Rohrwand gewichtet wird.

4. Verfahren nach einem der Ansprüche 1 bis 3, **dadurch gekennzeichnet, dass** die Berechnung zur Ermittlung der Dampftemperatur in den Rohren des betreffenden Segments anhand einer zunächst vorgenommenen Berechnung des Nutzwärmestroms als Funktion des einfallenden Wärmestroms, der gemessenen Dampftemperatur und der Oberflächentemperatur des betreffenden Segments durchgeführt wird.

5. Verfahren nach einem der Ansprüche 1 oder 4, **dadurch gekennzeichnet, dass** die Dampftemperatur am Dampfaustritt der Rohre der ersten Überhitzerstufe gemessen wird.

6. Verfahren nach einem der Ansprüche 1 bis 5, **dadurch gekennzeichnet, dass** der Nutzwärmestrom in einem Segment zwecks Kalibrierung der Berechnung gemessen wird.

7. Verfahren nach Anspruch 6, **dadurch gekennzeichnet, dass** eine Kalibrierung der Messung der mittleren Oberflächentemperatur in dem Segment oder in denjenigen Segmenten erfofgt, in welchen der Nutzwärmestrom gemessen wird.

## Claims

1. Method for determining and monitoring the degree of material depletion of the pipes of heating areas in steam generating plants fired with fossil fuels by means of at least one device for recording a thermal image,
- the walls of the furnace cavity being divided into n segments
- at least one thermal image of the furnace cavity being produced,
- an average surface temperature being determined for each of the segments on the basis of the thermal image,
- the incident heat flow being determined by measurement for each of the segments for various operating parameters in the start-up phase of the steam generator,
- the steam temperature of each pipe of the steam generator being measured at a measuring point,
- the useful heat flow being approximately calculated for each of the segments as a function of the incident heat flow of the segment concerned, of the average surface temperature of the segment concerned, and of the measured steam temperature in the pipes of the segment concerned,
- the steam temperature in the pipes of the segment concerned being calculated by approximation calculation over the length of the pipe, starting from the measuring point, for each of the n segments with the aid of the calculated useful heat flow,
- the useful heat flow being calculated exactly by using the calculated steam temperature of the segment concerned,
- an average pipe wall temperature, averaged over the operating time of the pipes of the segment, being determined for each of the segments as a function of the incident heat flow, of the calculated useful heat flow and of the average surface temperature, and
- a theoretical lifetime consumption of the pipes of the segment being calculated from the average pipe wall temperature while taking into account material stresses.

2. Method according to Claim 1, **characterized in that** the pipe wall temperature is determined as a mean value, averaged locally over the wall thickness.

3. Method according to Claim 2, **characterized in that** the geometrical mean value is weighted while taking into account the temperature distribution of the pipe wall.

4. Method according to one of Claims 1 to 3, **characterized in that** the calculation for determining the steam temperature in the pipes of the segment concerned is carried out on the basis of an initially performed calculation of the useful heat flow as a function of the incident heat flow, of the measured steam temperature and of the surface temperature of the segment concerned.

5. Method according to either of Claims 1 and 4, **characterized in that** the steam temperature is measured at the steam outlet of the pipes of the first superheater stage.

6. Method according to one of Claims 1 to 5, **characterized in that** the useful heat flow in a segment is measured for the purpose of calibration of the calculation.

7. Method according to Claim 6, **characterized in that** a calibration of the measurement of the average surface temperature takes place in the segment or those segments in which the useful heat flow is measured.

## Revendications

1. Procédé de détermination et de surveillance du degré de fatigue du matériau des tuyaux de surfaces de chauffage dans des installations de production de vapeur alimentées par des combustibles fossiles au moyen d'au moins un dispositif pour enregistrer une image thermique,
- dans lequel on divise les parois du foyer en n segments,
- on établit au moins une image thermique du foyer,
- pour chacun des segments, on détermine une température de surface moyenne au moyen de l'image thermique,
- pour chacun des segments, on détermine le flux de chaleur incident par la mesure de différents paramètres de fonctionnement dans la phase de mise en service du générateur de vapeur,
- on mesure la température de vapeur de chaque tuyau du générateur de vapeur en un point de mesure,
- pour chacun des segments, on calcule par approximation le flux de chaleur utile en fonction du flux de chaleur incident du segment concerné, de la température de surface moyenne du segment concerné, et de la température de vapeur mesurée dans les tuyaux du segment concerné,
- on calcule la température de vapeur dans les tuyaux du segment concerné par calcul par approximation sur la longueur de tuyau en partant du point de mesure pour chacun des n segments à l'aide du flux de chaleur utile calculé,
- on calcule avec précision le flux de chaleur utile en utilisant la température de vapeur mesurée du segment concerné,
- pour chacun des segments, on détermine, en fonction du flux de chaleur incident, du flux de chaleur utile calculé et de la température de surface moyenne, une température de paroi de tuyau moyenne en moyenne temporelle sur la durée de fonctionnement des tuyaux du segment, et
- on calcule une consommation théorique sur la durée de vie des tuyaux du segment à partir de la température de paroi de tuyau moyenne en tenant compte des contraintes du matériau.

2. Procédé selon la revendication 1, **caractérisé en ce que** l'on détermine la température de paroi de tuyau comme valeur moyenne calculée en moyenne localement sur l'épaisseur de paroi.

3. Procédé selon la revendication 2, **caractérisé en ce que** l'on pondère la valeur moyenne géométrique en tenant compte de la répartition de la température de la paroi de tuyau.

4. Procédé selon l'une quelconque des revendications 1 à 3, **caractérisé en ce que** l'on effectue le calcul pour la détermination de la température de vapeur dans les tuyaux du segment concerné à l'aide d'un calcul effectué au préalable du flux de chaleur utile en fonction du flux de chaleur incident, de la température de vapeur mesurée et de la température de surface du segment concerné.

5. Procédé selon une des revendications 1 ou 4, **caractérisé en ce que** l'on mesure la température de vapeur à la sortie de vapeur des tuyaux du premier étage de surchauffeur.

6. Procédé selon l'une quelconque des revendications 1 à 5, **caractérisé en ce que** l'on mesure le flux de chaleur utile dans un segment pour le calibrage du calcul.

7. Procédé selon la revendication 6, **caractérisé en ce que** l'on opère un calibrage de la mesure de la température de surface moyenne dans le segment ou dans les segments, dans lesquels on mesure le flux de chaleur utile.
